# EUROPEAN PATENT SPECIFICATION

(11) **EP 3 241 757 B1**
(45) Date of publication and mention of the grant of the patent: **26.06.2019**
(21) Application number: 17168665.2
(22) Date of filing: 28.04.2017
(51) Int. Cl.: B64D 37/32

(54) **FUEL TANK INERTING SYSTEMS FOR AIRCRAFT**
SYSTEME ZUR KRAFTSTOFFTANKINERTISIERUNG FÜR EIN FLUGZEUG
SYSTÈMES D'INERTAGE DE RÉSERVOIR DE CARBURANT POUR AÉRONEF

(30) Priority: 29.04.2016 US 201662329647 P
(43) Date of publication of application: 08.11.2017
(73) Proprietor: Hamilton Sundstrand Corporation, Charlotte, NC 28217 (US)
(72) Inventor: D'ORLANDO, Paul, Simsbury, CT Connecticut 06070 (US); SURAWSKI, Eric, Glastonbury, CT Connecticut 06033 (US)
(74) Representative: Dehns

(56) References cited:
- GB-A- 2 499 578
- US-A1- 2007 023 577
- US-A1- 2010 310 392

## Description

### BACKGROUND OF THE INVENTION

The subject matter disclosed herein generally relates to fuel tank inerting systems for aircraft and, more particularly, to fuel tank inerting systems configured to supply inert gas in an aircraft.

In general, on aircraft, conditioning systems, cabin pressurization systems, and cooling systems are powered by engine bleed air, and specifically bleed air pressures at cruise altitudes. For example, pressurized air is bled from an engine of the aircraft and is provided to a cabin through a series of systems that alter the temperatures and pressures of the bled air. To power the systems for treating the bleed air, generally the source of energy is the air pressure of the bleed air itself. As a result, traditional air conditioning and treatment systems require relatively high pressures at cruise altitudes (i.e., low pressure air), that is, the ambient air must be compressed to higher pressures. The relatively high pressures required in current air conditioning/treatment systems can limit efficiency with respect to engine fuel burn.

The air bled from engines may be used for environmental control systems, such as used to supply air to the cabin and to other systems within an aircraft. Additionally, the air bled from the engines may be supplied to inerting apparatuses to provide an inert gas supply to a fuel tank. The air may be bled from compressed ram air.

Regardless of the source, the bleed air is passed through a porous hollow fiber membrane-tube bundle, typically referred to as an air separation module ("ASM"). In operation, a downstream flow control valve is operated to close such that back pressure can be applied to the membrane to force some amount of air through the membrane as opposed to flowing though the tube. The membrane is selected and/or configured such that oxygen passes more easily through the membrane than other gasses, such as nitrogen. As such, the air separation module is configured to generate nitrogen-enriched air to continue through the flow control valve and can then be supplied into a fuel tank of the aircraft.

The separation efficiency of the membrane is affected by the air temperature. The higher the temperature, the more efficient the separation of oxygen and nitrogen is, and, hence the more pure the nitrogen enriched air that can be supplied into the fuel tank can be. There is a temperature maximum however that must be adhered to maintain the safety of the components downstream of the bleed air. Such components can include, but are not limited to, air filters, valves, sensors, etc. Further, there may be a maximum temperature of the air being supplied into the fuel tank. Thus, a means of controlling the temperature of the air separation module feed air is needed. An air separation system is known from US 2010/0310392 A1 which uses compressed air from a jet engine, cools it down and injects it into an air separation system for providing nitrogen enriched air to a fuel tank. Cooling of the compressed air stream is done by guiding a first separate part of the compressed air stream through a turbine for cooling it and using it to cool down a second separate part of the compressed air stream in a heat exchanger. The cooled second separate part of the compressed air stream is then injected back into the compressed air stream to cool it.

Current commercial platforms today use a dedicated ram air heat exchanger in conjunction with a bypass valve. Military systems use a "cold corner tap" from the primary heat exchanger of an environmental control system for the cold air source and mix such cold air with the hot bleed air to create a desired temperature to feed the air separation module.

There are negative impacts to having a dedicated heat exchanger in the ram circuit. Most notably, such dedicated heat exchanger can partially obstruct ram air to an environmental control system heat exchanger or such heat exchanger may require a dedicated ram circuit which can consume more volume and weight within an aircraft.

### BRIEF DESCRIPTION OF THE INVENTION

According to some embodiments, aircraft air separation systems according to claim 1 are provided.

In addition to one or more of the features described herein, or as an alternative, further embodiments of the air separation systems may include an aircraft environmental control system having a primary heat exchanger, wherein the source of mixing air is a cooling air extraction element arranged to extract air that exits the primary heat exchanger.

In addition to one or more of the features described herein, or as an alternative, further embodiments of the air separation systems may include that the cooling air extraction element is a cold corner tap.

In addition to one or more of the features described herein, or as an alternative, further embodiments of the air separation systems may include that the cold corner tap is part of the primary heat exchanger and located at an outlet of the primary heat exchanger.

The air separation systems include a dedicated air separation module heat exchanger, wherein the source of the mixing air is the dedicated air separation module heat exchanger.

The air separation systems include that the dedicated air separation module heat exchanger receives air from the compressed air source to be treated within the dedicated air separation module heat exchanger by air from a cold air source operating as a heat sink.

In addition to one or more of the features described herein, or as an alternative, further embodiments of the air separation systems may include that the cold air source operating as a heat sink is cabin recirculation air.

In addition to one or more of the features described herein, or as an alternative, further embodiments of the air separation systems may include that the cold air source operating as a heat sink is cabin exhaust air.

In addition to one or more of the features described herein, or as an alternative, further embodiments of the air separation systems may include that the cold air source operating as a heat sink is outlet air of an environmental control system.

In addition to one or more of the features described herein, or as an alternative, further embodiments of the air separation systems may include that treated air is maintained at temperatures below 102 °C (215 °F).

In addition to one or more of the features described herein, or as an alternative, further embodiments of the air separation systems may include that treated air is maintained at temperatures in a range of 65 °C (150 °F) to 93 °C (200 °F).

In addition to one or more of the features described herein, or as an alternative, further embodiments of the air separation systems may include a filter arranged upstream of the air separation module and configured to filter the treated air.

In addition to one or more of the features described herein, or as an alternative, further embodiments of the air separation systems may include that the treated air is supplied completely from the source of the mixing air.

In addition to one or more of the features described herein, or as an alternative, further embodiments of the air separation systems may include a controller configured to control one or more valves to maintain the treated air at or below a predetermined temperature.

In addition to one or more of the features described herein, or as an alternative, further embodiments of the air separation systems may include that the compressed air source is one of (i) bleed air, (ii) an electric compressor, or (iii) a turbine driven compressor.

Technical effects of embodiments of the invention include efficient inerting apparatus supply systems and processes configured to efficiently operate regardless of or independent from the operational status of an aircraft.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic illustration an environmental control system and fuel tank inerting system in accordance with an embodiment of the present disclosure;
FIG. 3 is a schematic illustration of a fuel tank inerting system in accordance with another embodiment of the present disclosure;
FIG. 4 is a schematic illustration of a fuel tank inerting system in accordance with another embodiment of the present disclosure; and
FIG. 5 is a schematic illustration of a fuel tank inerting system in accordance with another embodiment of the present disclosure.

### DETAILED DESCRIPTION OF THE INVENTION

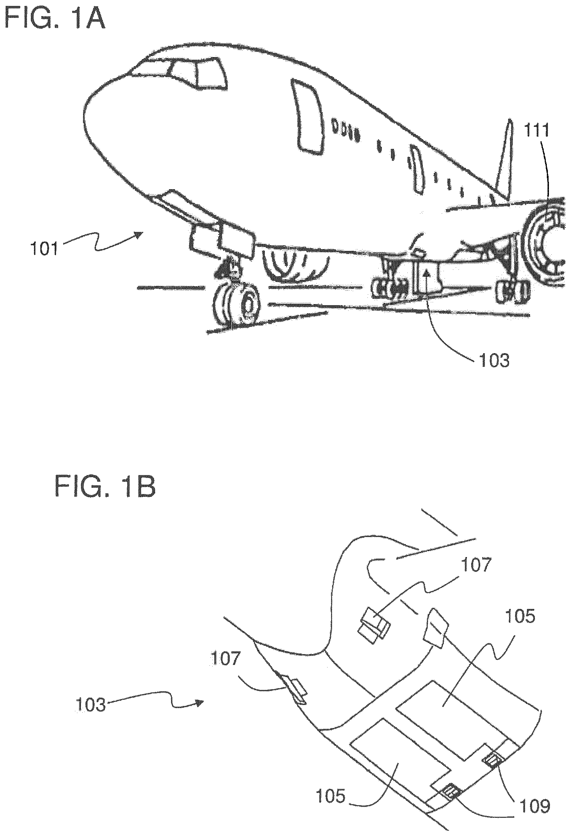

As shown in FIGS. 1A-1B, an aircraft 101 can include one or more bays 103 beneath a center wing box. The bay 103 can contain and/or support one or more components of the aircraft 101. For example, in some configurations, the aircraft 101 can include environmental control systems and/or fuel inerting systems within the bay 103. As shown in FIG. 1B, the bay 103 includes bay doors 105 that enable installation and access to one or more components (e.g., environmental control systems, fuel inerting systems, etc.). During operation of environmental control systems and/or fuel inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, fuel inerting systems, etc.). Some air may be exhaust through one or more ram air exhaust outlets 109.

Also shown in FIG. 1A, the aircraft 101 includes one or more engines 111. The engines 111 are typically mounted on wings of the aircraft 101, but may be located at other locations depending on the specific aircraft configuration. In some aircraft configurations, air can be bled from the engines 111 and supplied to environmental control systems and/or fuel inerting systems, as will be appreciated by those of skill in the art.

As discussed above, a dedicated heat exchange in environmental control systems and/or fuel inerting systems may be undesirable due to the increased space and/or weight on the aircraft. Accordingly, embodiments of the present disclosure are directed to systems that may eliminate the need for a dedicated heat exchanger in the ram circuit. Instead, embodiments of the present disclosure make use of another cold air source as a heat sink. Various example cold air sources are described herein. These sources include, but are not limited to, conditioned environmental control system outlet air, cabin recirculation air, and cabin exhaust air. Bleed air can be taken downstream of the engine bleed system and upstream of the environmental control system primary heat exchanger and heat can be transferred into any individual or combination of the cold air sources in the various embodiments of the present disclosure or variations thereon.

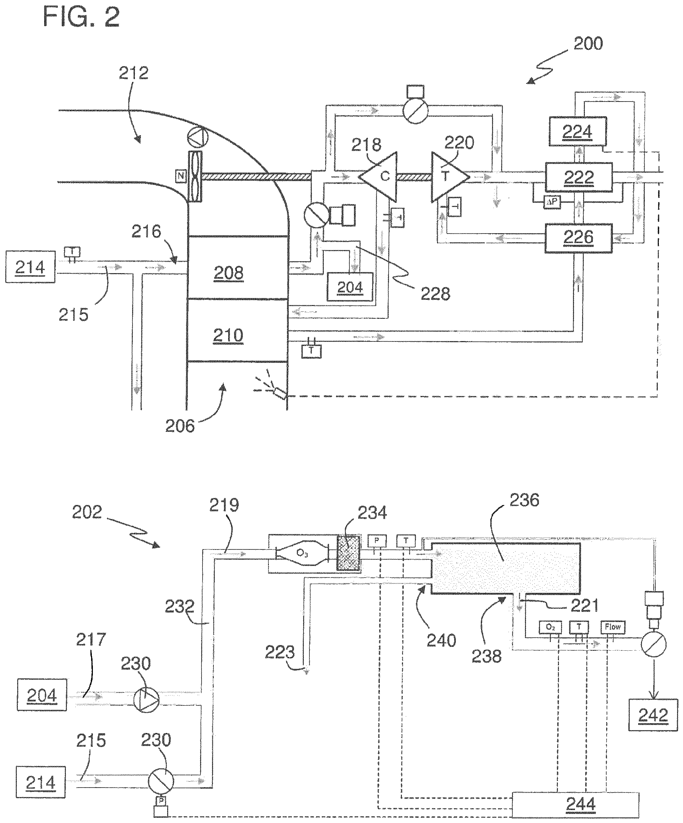

Turning now to FIG. 2, a schematic illustration of an environmental control system 200 and fuel inerting system 202 in accordance with a non-limiting embodiment of the present disclosure is shown. The environmental control system 200 is arranged to supply compressed air (e.g., bleed air) to the fuel inerting system 202 and thus the two systems 200, 202 are fluidly connected at connector 204. Although shown and described herein with respect to bleed air, various other embodiments may be employed without departing from the scope of the present disclosure. For example, compressed air can be employed that is sourced from an electric compressor, a turbine driven compressor, a bleed air driven compressor, etc.

The environmental control system 200 includes a ram portion having a ram air inlet 206, a primary heat exchanger 208, a secondary heat exchange 210, and a ram air outlet 212, as will be appreciated by those of skill in the art. A compressed air source 214 (e.g., an engine, a compressor, etc.) is arranged to provide compressed air 215 to a compressed air inlet 216 that passes through the primary heat exchanger 208 to be conditioned therein. The compressed air 215 is then passed through and/or interacts with various components of environmental control system 200, including, but not limited to, a compressor 218, a turbine 220 that drives the compressor 218, a condenser 222, a water collector 224, and a reheater 226. Although schematically shown with an air flow through the environmental control system 200, those of skill in the art will appreciate the functions and fluid connections therein, and thus no further discussion will be provided herein.

As shown, after the compressed air 215 from the compressed air source 214 passes through the primary heat exchanger 208 a cooling air extraction element 228 is arranged to extract cold mixing air 217 from the compressed air 215 flow to be provided to the fuel inerting system 202 through the connector 204 as mixing air 217. In some non-limiting embodiments, the cooling air extraction element 228 is a cold corner tap that is arranged at, on, or downstream from the primary heat exchanger 208. In other embodiments, the cooling air extraction element 228 is any type of tap, port, flow line, valve, etc. that is arranged to extract air downstream of the primary heat exchanger 208. The cooling air extraction element 228 is arranged such that cold air from the compressed air source 214 is removed at a desired temperature. In some embodiments, the cooling air extraction element 228 is arranged relative to the primary heat exchanger 208 such that the air supplied to the fuel inerting system 202 is maintained below approximately 102 °C (215 °F).

As shown in FIG. 2, the fuel inerting system 202 receives the mixing air 217 from the cooling air extraction element 228 at the connector 204. The mixing air 217 can be mixed with compressed air 215 provided from the compressed air source 214 (through a separate supply line from the environmental control system 200), as schematically shown. One or more valves 230 are arranged to control the flow and mixing of both the mixing air 217 from the cooling air extraction element 228 and the compressed air 215 from the compressed air source 214 within the fuel inerting system 202. The valves 230 can be arranged as check valves, trim valves, flow metering vales, etc. as will be appreciated by those of skill in the art. In some embodiments, some or all of the valves 230 may be actively controlled (e.g., electronically, mechanically, etc.), or some or all of the valves 230 may be passive valves (e.g., check valves, ball valves, etc.). The air mixes within a feed line 232 to generate treated air 219 (treated air that is to be separated within an air separation module 236) and is suppled a filter 234 of the fuel inerting system 202. After being filtered within the filter 234, the treated air 219 enters the air separation module ("ASM") 236 where nitrogen enriched air 221 and oxygen enriched air 223 are separated at first outlet 238 and second outlet 240, respectively, as schematically shown. The air separation module 236 includes, in some embodiments and as will be appreciated by those of skill in the art, a membrane for separating nitrogen and oxygen of the treated air 219 supplied through the feed line 232. The nitrogen enriched air 221 can then be supplied to a fuel tank 242 to provide a volume of inert gas (e.g., the nitrogen enriched air 221) into the fuel tank 242, as will be appreciated by those of skill in the art. As shown, the fuel inerting system 202 includes a controller 244 that is arranged to control metering of air within the feed line 232 and the supply of nitrogen enriched air 221 to the fuel tank 242.

The controller 244 can be a dedicated controller that is part of the fuel inerting system 202, can be part of the environmental control system 200, and/or other controller that is part of systems of an aircraft in which the fuel inerting system 202 is installed. Thus, the controller 244 is not intended to be limiting in connection, structure, and/or function. The controller 244 can include various electronic components, including, but not limited to, processors, memory, electronic busses, communication components, etc. as will be appreciated by those of skill in the art.

In accordance with the embodiment shown in FIG. 2, the need for a dedicated heat exchange in the ram circuit can be limited and/or completely eliminated. The cold air function to provide air conditioning to air within the air separation module (used to optimize the separation function) is integrated into the environmental control system 200. As shown in FIG. 2, the primary heat exchanger 208 is arranged with the cooling air extraction element 228 downstream of the outlet of the primary heat exchanger 208, through which the mixing air 217 flows. In another non-limiting embodiment, an independent bypass or tap can be arranged in or on the primary heat exchanger 208, which may require additional headers or a cold corner tap directly on or integrated into the primary heat exchanger 208. The cooling air extraction element 228 shown in FIG. 2 is achieved through use of a splitting partition in an outlet header of the primary heat exchanger 208 with the cold corner air (mixing air 217) being extracted from the ram air inlet 206 and bleed outlet corner of the primary heat exchanger 208.

The primary heat exchanger 208 of the environmental control system 200 is designed such that the outlet air (through cooling air extraction element 228) can cool the compressed air within the feed line 232 enough to maintain a safe and optimal temperature for the air separation module 236, the fuel tank 242, and other downstream components. In one non-limiting example, the arrangement of the environmental control system 200 and feed line 232 (or other features) are arranged to generally limit the supply temperature to about 93 °C (about 200 °F), and in some embodiments limited to a range of about 65 °C (about 150 °F) to about 93 °C (about 200 °F). However, in some configurations and/or systems, particularly based on the air separation module configuration, the supply temperature may be higher or lower, to thus optimize the air separation achieved within the air separation module 236.

The controller 244 can be arranged to control the valves 230 to achieved desired temperatures of air supplied to the air separation module 236. Various sensors can be positioned along the feed line 232 upstream and/or downstream of the filter 234 to enable desired valve control. For example, in operation, when the temperature from the outlet of the primary heat exchanger 208 is lower than optimal, compressed air from compressed air source 214 can be mixed through the use of a temperature control valve (e.g., one of the valves 23) with the outlet air of the primary heat exchanger 208 to bring the temperature back up to optimal (e.g., mixing within the feed line 232).

In an alternative embodiment, a way to integrate into environmental control systems having existing primary heat exchangers, air tapped off downstream of the primary heat exchanger is used to partially cool the air. A second, additional small dedicated air separation module heat exchanger can be positioned at the connector 204. Various other configurations are possible without departing from the scope of the present disclosure.

For example, instead of using ram air as the heat sink (e.g., ram air passing through the primary and secondary heat exchangers 208, 210 in the environmental control system 200 shown in FIG. 2) as current systems do, an alternate source of cold air can be employed. For example, various sources of cold air within systems can include, but is not limited to, environmental control system pack outlets, cabin recirculation air, or cabin exhaust air that is expelled overboard as fresh air from the environmental control system replaces the exhaust air. The required compressed air flow for air separation modules is significantly less than that required or employed in environmental control systems. For example, an air separation module may require less than 10% of environmental control system flow. As such, a dedicated air separation module heat exchanger may be relatively small (in terms of weight, size, volume, etc.).

Further, in such arrangements, the amount of heat transfer that is needed may be reduced because the primary heat exchanger of the environmental control system may already reduce the temperature to desired temperatures, or at least close to desired temperatures. As such, a dedicated air separation module heat exchanger can be relatively small as a low heat transfer rate may be sufficient to achieve desired air temperatures for the air separation module. That is, the dedicated air separation module heat exchanger in accordance with various embodiments of the present disclosure may only need to be sized to reduce air temperatures a small amount to achieve desired or optimal temperatures for operation of the air separation module.

Although shown and described with the compressed air source 214 supplying compressed air 215 into both the air inlet 216 of the primary heat exchanger 208 and the feed line 232 of the fuel inerting system 202, such arrangement is not to be limiting. For example, in some embodiments, the compressed air that is supplied to the primary heat exchanger 208 can be sourced from a different supply than that of the compressed air that is supplied to the fuel inerting system 202. For example, in one non-limiting embodiment, bleed air can be the compressed air source for the primary heat exchanger 208 and an electric compressor can be the compressed air source for the fuel inerting system 202.

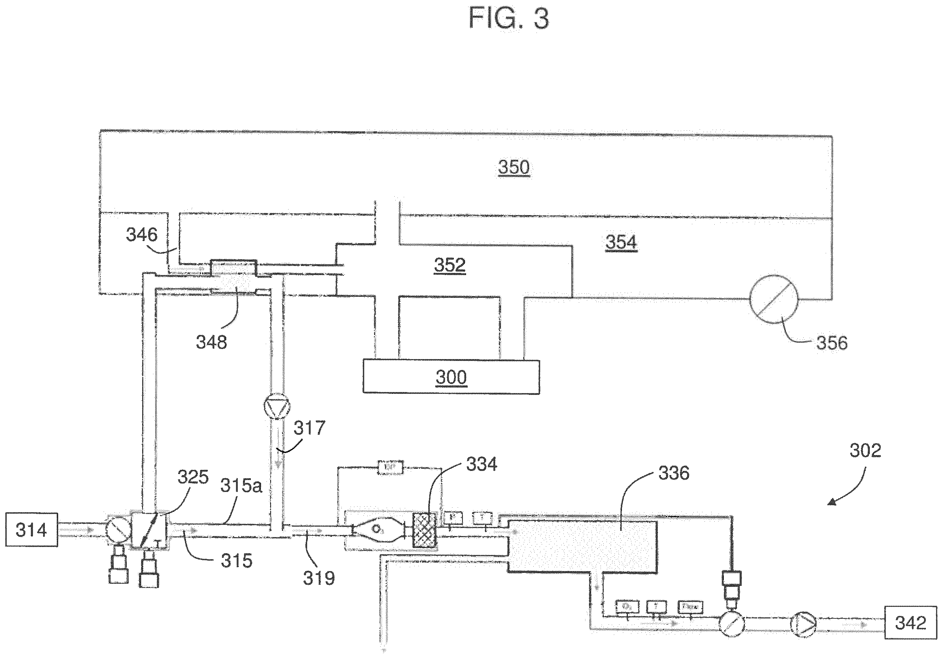

Turning now to FIG. 3, an embodiment of an air separation system 302 having a supply of mixing air 317 treated by cabin recirculation air 346 in accordance with an embodiment of the present disclosure is shown. In this embodiment, the need for a dedicated heat exchanger in the ram circuit may be eliminated. In this embodiment, the cabin recirculation air 346 can be employed as a cold air source to treat compressed air 315, and thus operate as a cold air source as a heat sink to reduce temperatures of the compressed air 315 from a compressed air source 314. As schematically shown, compressed air 315 from the compressed air source 314 can be directed to a dedicated air separation module heat exchanger 348 that is positioned such that the cabin recirculation air 346 can extract heat from the compressed air 315 from the compressed air source 314. As shown, a controllable valve 325 can be employed to direct some or all compressed air 315 toward the dedicated air separation module heat exchanger 348.

As schematically shown, cabin recirculation air 346 can be extracted from a cabin 350 of the aircraft. The cabin recirculation air 346 is fed into a mix manifold 352 that is fluidly connected to an environmental control system 300, as will be appreciated by those of skill in the art. The mix manifold 352 can be located within a pressurized zone 354 of the aircraft (e.g., cargo, etc.) that includes a cabin outflow valve 356. As shown, the dedicated air separation module heat exchanger 348 can be positioned upstream of the mix manifold 352 and the cabin recirculation air 346 can operate as a heat sink to extract heat from the compressed air 315 directed from the compressed air source 314 and thus lower the temperature thereof. After passing through the dedicated air separation module heat exchanger 348, the mixing air 317 may be supplied directly through a filter 344 and into an air separation module 336 of the air separation system 302. Nitrogen enriched air may then be supplied to a fuel tank 342 to provide an inert volume within the fuel tank 342. In some embodiments, the mixing air 317 can be mixed with a portion of the compressed air 315 to generate treated air 319. However, in some embodiments, the mixing air 317 can be the sole source of "treated air 319" when the controlled valve 325 is arranged to prevent any compressed air 315 from bypassing the dedicated air separation module heat exchanger 348.

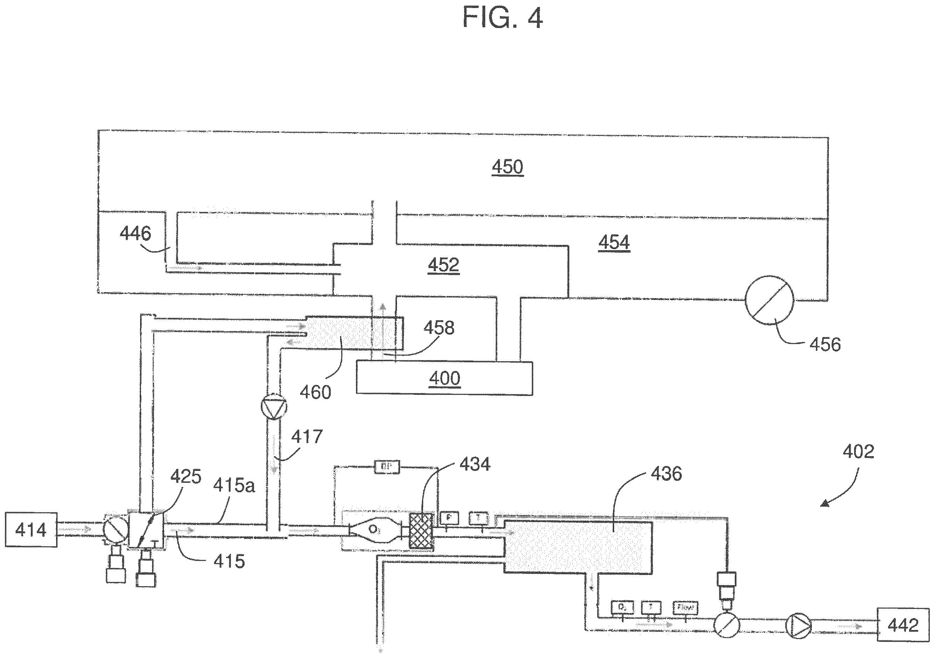

Turning now to FIG. 4, an embodiment of an air separation system 402 having a supply of mixing air 417 treated by outlet air 458 of an environmental control system 400 in accordance with an embodiment of the present disclosure is shown. In this embodiment, the need for a dedicated heat exchanger in the ram circuit may be eliminated. In this embodiment, the environmental control system outlet air 458 can be employed as a cold air source, and thus operate as a cold air source as a heat sink to reduce temperatures of air from a compressed air source 414. As schematically shown, air from the compressed air source 414 can be directed to a dedicated air separation module heat exchanger 460 that is positioned such that the environmental control system outlet air 458 can extract heat from the air from the compressed air source 414.

As schematically shown, cabin recirculation air 446 is extracted from a cabin 450 of the aircraft. The cabin recirculation air 446 is fed into a mix manifold 452 that is fluidly connected to the environmental control system 400, as will be appreciated by those of skill in the art. The mix manifold 452, as shown, is located within a pressurized zone 454 of the aircraft (e.g., cargo, etc.) that includes a cabin outflow valve 456. As shown, the dedicated air separation module heat exchanger 460 can be positioned upstream of the mix manifold 452 on a flow path from the environmental control system 400. The environmental control system outlet air 458 can operate as a heat sink to extract heat from the air directed from the compressed air source 414 and thus lower the temperature thereof. After passing through the dedicated air separation module heat exchanger 460, the treated air may be supplied through a filter 444 and into an air separation module 436 of the air separation system 402. Nitrogen enriched air may then be supplied to a fuel tank 442 to provide an inert volume within the fuel tank 442. In some embodiments, the mixing air 417 can be mixed with a portion of the compressed air 415 to generate treated air 419. However, in some embodiments, the mixing air 417 can be the sole source of "treated air 419" when the controlled valve 425 is arranged to prevent any compressed air 415 from bypassing the dedicated air separation module heat exchanger 460.

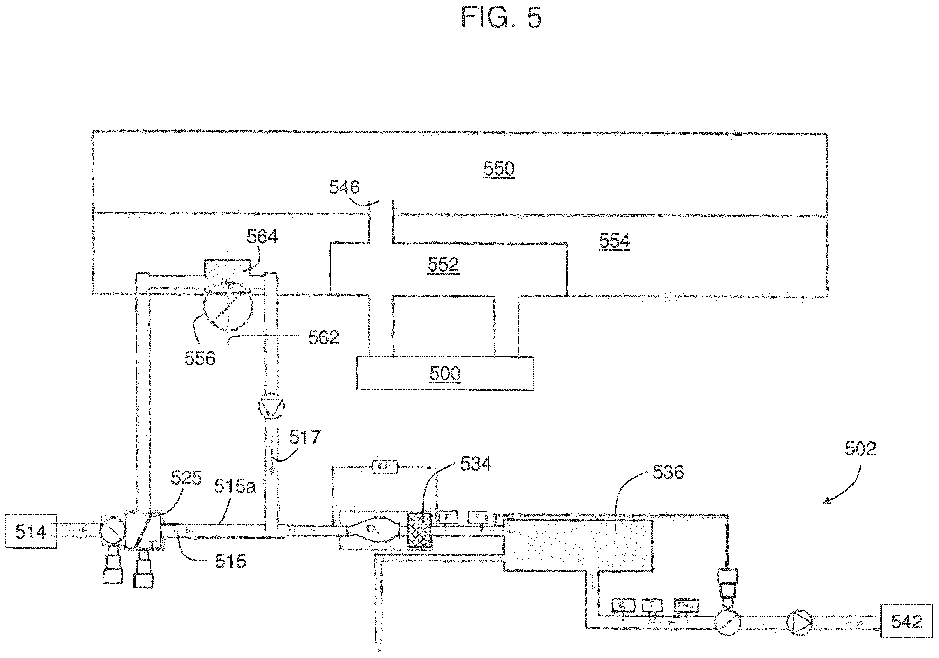

Turning now to FIG. 5, an embodiment of an air separation system 502 having a supply of mixing air 517 treated by cabin exhaust air 562 in accordance with an embodiment of the present disclosure is shown. In this embodiment, the need for a dedicated heat exchanger in the ram circuit may be eliminated. In this embodiment, the cabin exhaust air 562 can be employed as a cold air source, and thus operate as a cold air source as a heat sink to reduce temperatures of air from a compressed air source 514. As schematically shown, air from the compressed air source 514 can be directed to a dedicated air separation module heat exchanger 564 that is positioned such that the cabin exhaust air can extract heat from the air from the compressed air source 514.

As schematically shown, cabin recirculation air 546 is extracted from a cabin 550 of the aircraft. The cabin recirculation air 546 is fed into a mix manifold 552 that is fluidly connected to the environmental control system 500, as will be appreciated by those of skill in the art. The mix manifold 552, as shown, is located within a pressurized zone 554 of the aircraft (e.g., cargo, etc.) that includes a cabin outflow valve 556. As shown, the dedicated air separation module heat exchanger 564 is positioned at the cabin outflow valve 556 such that the cabin exhaust air 562 passes through the dedicated air separation module heat exchanger 564. The cabin exhaust air 562 can operate as a heat sink to extract heat from the air directed from the compressed air source 514 and thus lower the temperature thereof. After passing through the dedicated air separation module heat exchanger 564, the treated air may be supplied through a filter 544 and into an air separation module 536 of the air separation system 502. Nitrogen enriched air may then be supplied to a fuel tank 542 to provide an inert volume within the fuel tank 542. In some embodiments, the mixing air 517 can be mixed with a portion of the compressed air 515 to generate treated air 519. However, in some embodiments, the mixing air 517 can be the sole source of "treated air 519" when the controlled valve 525 is arranged to prevent any compressed air 515 from bypassing the dedicated air separation module heat exchanger 564.

The three example cold air sources described herein (e.g., FIGS. 3-5) include the conditioned environmental control system outlet air, cabin recirculation air, and cabin exhaust air. In some embodiments, bleed air can be taken downstream of an engine bleed system and upstream of the environmental control system primary heat exchanger (e.g., to the left of the primary heat exchanger 208 in FIG. 2) and heat can be transferred into the any individual or combination of the cold air sources described herein (e.g., combinations of the embodiments of FIGS. 3-5). A heat exchanger bypass line (labeled 315a, 415a, 515a in FIGS. 3-5, respectively) and control valve can be used to maintain a steady temperature and/or the cooled compressed air downstream of the respective heat exchanger (labeled 348, 460, 564 in FIGS. 3-5, respectively), air can be mixed further downstream with warm compressed air which may be employed based on physical limitations and/or restraints (e.g., space, location, etc.). In some embodiments, air tapped off down-stream of the primary heat exchanger of the environmental control system can be employed to partially cool the air and an additional, small dedicated air separation module heat exchanger can be installed elsewhere within the system (e.g., at locations shown in the embodiments of FIGS. 3-5).

In various embodiments of the present disclosure, the dedicated air separation module heat exchanger can be sized and positioned to reduce the temperature under all conditions to a desired temperature, with the cooler primary air, received from, for example, cooling air extraction element 228 shown in FIG. 2, as a starting point. That is, in some embodiments, a combination of features as described herein can be employed to enable an efficient cooling scheme (e.g., combining the downstream cool air (from a primary heat exchanger) with a small dedicated air separation module heat exchanger). For example, in such arrangements, and with reference to the embodiment shown in FIG. 3, the dedicated air separation module heat exchanger 348 may only be required to reduce the temperature a small amount, as compared to a typically large reduction in temperature, e.g., from about 232 °C (about 450 °F) to about 93 °C (about 200 °F) (approximately a 93 °C (about 200 °F) temperature change). With the combination approach, the temperature difference is significantly lower for the reduction to be achieved by the small dedicated air separation module heat exchanger, e.g., in one case the required temperature change was 21 °C or less (70 °F or less).

While the invention has been described in detail in connection with only a limited number of embodiments, it should be readily understood that the invention is not limited to such disclosed embodiments. Rather, the invention can be modified to incorporate any number of variations, alterations, substitutions, combinations, sub-combinations, or equivalent arrangements not heretofore described, but which are commensurate with the scope of the invention as defined by the claims. Additionally, while various embodiments of the invention have been described, it is to be understood that aspects of the invention may include only some of the described embodiments.

For example, although certain configurations are shown in FIGS. 2-5, those of skill in the art will appreciate that other configurations may be used without departing from the scope of the invention. For example, other sources of air may be used for either supplying air to an inerting module and/or for supplying air to drive a turbine and compressor. Further, although there are valves and junctions illustratively shown at certain locations within the system(s), those of skill in the art will appreciate that these locations are merely for example only and other configurations may be used. Moreover, the order of components shown and described herein, in terms of the flow line and direction of air flow through the system may be changed without departing from the scope of the invention. For example, the location of the heat exchangers, compressors, turbines, valves, etc. may be adjusted based on the specific systems and efficiencies therein.

Accordingly, the present disclosure is not to be seen as limited by the foregoing description, but is only limited by the scope of the appended claims.

## Claims

1. An aircraft air separation system, the air separation system comprising:
a compressed air source (214) arranged to supply compressed air;
an air separation module (236) arranged to receive air from the compressed air source, the air separation module arranged to separate air into nitrogen enriched air and oxygen enriched air, wherein the nitrogen enriched air is supplied to a fuel tank (242) of the aircraft;
a source of mixing air (317) arranged to fluidly supply the mixing air at a location between the compressed air source and the air separation module such that the mixing air is selectively mixed with the compressed air to generate treated air that is supplied to the air separation module; and
a dedicated air separation module heat exchanger (348), wherein the source of the mixing air is the dedicated air separation module heat exchanger,
wherein the dedicated air separation module heat exchanger receives air from the compressed air source to be treated within the dedicated air separation module heat exchanger by air from a cold air source operating as a heat sink, and
wherein the cold air source operating as a heat sink is one of cabin recirculation air, cabin exhaust air, and outlet air of an environmental control system.

2. The air separation system of claim 1, further comprising an aircraft environmental control system (200) having a primary heat exchanger (208), wherein the source of mixing air is a cooling air extraction element arranged to extract air that exits the primary heat exchanger.

3. The air separation system of any preceding claim, wherein treated air is maintained at temperatures below 102 °C (215 °F).

4. The air separation system of claim 3, wherein treated air is maintained at temperatures in a range of 65 °C (150 °F) to 93 °C (200 °F).

5. The air separation system of any preceding claim, further comprising a filter (234) arranged upstream of the air separation module and configured to filter the treated air.

6. The air separation system of any preceding claim, wherein the treated air is supplied completely from the source of the mixing air.

7. The air separation system of any preceding claim, further comprising a controller (244) configured to control one or more valves to maintain the treated air at or below a predetermined temperature.

8. The air separation system of any preceding claim, wherein the compressed air source is one of (i) bleed air, (ii) an electric compressor, or (iii) a turbine driven compressor.

## Patentansprüche

1. Lufttrennungssystem für ein Flugzeug, wobei das Lufttrennungssystem Folgendes umfasst:
eine Quelle für komprimierte Luft (214), die angeordnet ist, um komprimierte Luft liefern;
ein Lufttrennungsmodul (236), das dazu angeordnet ist, komprimierte Luft von der Quelle für komprimierte Luft zu empfangen, wobei das Lufttrennungsmodul dazu angeordnet ist, Luft in mit Stickstoff angereicherte Luft und mit Sauerstoff angereicherte Luft zu trennen, wobei die mit Stickstoff angereicherte Luft an einen Kraftstofftank (242) des Flugzeugs geliefert wird;
eine Quelle für Mischluft (317), die angeordnet ist, um die Mischluft an eine Stelle zwischen der Quelle für komprimierte Luft und dem Lufttrennungsmodul derart zu liefern, dass die Mischluft selektiv mit der komprimierten Luft gemischt wird, um behandelte Luft zu generieren, die an das Lufttrennungsmodul geliefert wird; und
einen dezidierten Lufttrennungsmodul-Wärmetauscher (348), wobei die Quelle für Mischluft der dezidierte Lufttrennungsmodul-Wärmetauscher ist,
wobei der dezidierte Lufttrennungsmodul-Wärmetauscher Luft von der Quelle für komprimierte Luft empfängt, die innerhalb des dezidierten Lufttrennungsmodul-Wärmetauschers durch Luft von einer Quelle für kalte Luft, die als eine Wärmesenke betrieben wird, behandelt werden soll, und
wobei die Quelle für kalte Luft, die als eine Wärmesenke betrieben wird, eine von rezirkulierter Kabinenluft, Kabinenabluft und Ausgangsluft eines Umgebungssteuerungssystems ist.

2. Lufttrennungssystem nach Anspruch 1, ferner ein Umgebungssteuerungssystem (200) für ein Flugzeug umfassend, das einen primären Wärmetauscher (208) aufweist, wobei die Quelle für Mischluft ein Extraktionselement für Kühlungsluft ist, das angeordnet ist, um Luft zu extrahieren, die den primären Wärmetauscher verlässt.

3. Lufttrennungssystem nach einem der vorstehenden Ansprüche, wobei die behandelte Luft bei einer Temperatur unter 102 °C (215 °F) gehalten wird.

4. Lufttrennungssystem nach Anspruch 3, wobei die behandelte Luft bei Temperaturen in einem Bereich von 65 °C (150 °F) bis 93 °C (200 °F) gehalten wird.

5. Lufttrennungssystem nach einem der vorstehenden Ansprüche, ferner einen Filter (234) umfassend, der stromaufwärts des Lufttrennungsmoduls angeordnet und dazu konfiguriert ist, die behandelte Luft zu filtern.

6. Lufttrennungssystem nach einem der vorstehenden Ansprüche, wobei die behandelte Luft vollständig von der Quelle der Mischluft geliefert wird.

7. Lufttrennungssystem nach einem der vorstehenden Ansprüche, ferner eine Steuerung (244) umfassend, die dazu konfiguriert ist, ein oder mehrere Ventile zu steuern, um die behandelte Luft bei oder unter einer vorbestimmten Temperatur zu halten.

8. Lufttrennungssystem nach einem der vorstehenden Ansprüche, wobei die Quelle für komprimierte Luft eines von (i) Zapfluft, (ii) einem elektrischen Kompressor oder (iii) einem Kompressor ist, der von einer Turbine angetrieben wird.

## Revendications

1. Système de séparation d'air d'aéronef, le système de séparation d'air comprenant :
une source d'air comprimé (214) agencée pour fournir de l'air comprimé ;
un module de séparation d'air (236) agencé pour recevoir de l'air provenant de la source d'air comprimé, le module de séparation d'air étant agencé pour séparer l'air en air enrichi en azote et en air enrichi en oxygène, dans lequel l'air enrichi en azote est acheminé jusqu'à un réservoir de carburant (242) de l'aéronef ;
une source d'air de mélange (317) agencée pour acheminer de manière fluidique l'air de mélange au niveau d'un emplacement situé entre la source d'air comprimé et le module de séparation d'air de sorte que l'air de mélange est mélangé de manière sélective avec l'air comprimé pour générer de l'air traité qui est acheminé jusqu'au module de séparation d'air ; et
un échangeur de chaleur du module de séparation d'air dédié (348), dans lequel la source de l'air de mélange est l'échangeur de chaleur du module de séparation d'air dédié,
dans lequel l'échangeur de chaleur du module de séparation d'air dédié reçoit l'air de la source d'air comprimé à traiter à l'intérieur de l'échangeur de chaleur du module de séparation d'air dédié, par l'air provenant d'une source d'air froid fonctionnant en tant que puits de chaleur, et
dans lequel la source d'air froid fonctionnant en tant que puits de chaleur est l'un de l'air de recirculation de cabine, de l'air d'échappement de cabine et de l'air de sortie d'un système de contrôle de l'environnement.

2. Système de séparation d'air selon la revendication 1, comprenant en outre un système de contrôle de l'environnement d'aéronef (200) comportant un échangeur de chaleur primaire (208), dans lequel la source d'air de mélange est un élément d'extraction d'air de refroidissement agencé pour extraire l'air qui sort de l'échangeur de chaleur primaire.

3. Système de séparation d'air selon une quelconque revendication précédente, dans lequel l'air traité est maintenu à des températures inférieures à 102 °C (215 °F).

4. Système de séparation d'air selon la revendication 3, dans lequel l'air traité est maintenu à des températures dans une plage de 65 °C (150 °F) à 93 °C (200 °F).

5. Système de séparation d'air selon une quelconque revendication précédente, comprenant en outre un filtre (234) agencé en amont du module de séparation d'air et conçu pour filtrer l'air traité.

6. Système de séparation d'air selon une quelconque revendication précédente, dans lequel l'air traité est acheminé entièrement depuis la source d'air de mélange.

7. Système de séparation d'air selon une quelconque revendication précédente, comprenant en outre un dispositif de commande (244) conçu pour commander une ou plusieurs vannes afin de maintenir l'air traité à une température inférieure ou égale à une température prédéterminée.

8. Système de séparation d'air selon une quelconque revendication précédente, dans lequel la source d'air comprimé est l'un de (i) l'air de prélèvement, (ii) un compresseur électrique ou (iii) un compresseur à turbine.
